# EUROPEAN PATENT APPLICATION

(11) **EP 2 397 357 A1**
(43) Date of publication of application: **21.12.2011**
(21) Application number: 11170152.0
(22) Date of filing: 16.06.2011
(51) Int. Cl.: B60K 35/00, G06F 3/048

(54) **Vehicle display**

(30) Priority: 21.06.2010 US 356824 P; 31.05.2011 US 118917
(71) Applicant: Delphi Technologies, Inc., Troy, MI 48007 (US)
(72) Inventor: Dybalski, Ronald H., Oxford, MI Michigan 48371 (US); Brooks, Vincent L., Troy, MI Michigan 48083 (US); Jiddou, Remon S., Commerce Township, MI Michigan 48382 (US); Nascimento, Aidano C., Rochester, MI Michigan 48307 (US)
(74) Representative: Denton, Michael John

(57) **Abstract**

A method (800) of displaying information to a person viewing a configurable display (12) in a vehicle (10). The method displays one of a plurality of page formats (200, 300, 400, 500, 600, 700) at a time. Each page format includes one or more images (201, 202, 212, 214, 222, 224, 226, 228, 238a, 238b, 238c), including a first image (314, 440, 550, 660, 770) in a distinct region of the display. The first image is positioned in an upper region (310, 410, 510, 610, 710) of the display when information conveyed by the first image originates from outside the vehicle, and the first image is positioned in a lower region (320, 420, 520, 620, 720) of the display when information conveyed by the first image originates from within the vehicle. The arrangement of images and the organization of the page formats are configured to convey a mental model of the environment about the vehicle, and displaying multiple pages arranged in a hierarchical order to further convey a mental model of how information is arranged on the various pages is provided.

## Description

### TECHNICAL FIELD

The invention generally relates to a method of displaying information on a configurable display in a vehicle, and more particularly relates to displaying various pages having images arranged according to the origin of information conveyed by the image.

### BACKGROUND OF INVENTION

Many vehicles are equipped with multiple display types to convey information to a person such as an operator. Display types include instrument clusters, entertainment displays, heating/ventilation/air-conditioning displays, navigation displays, and other general purpose information displays. In most cases the displays are discrete, and regardless of mechanical or digital format, are not user defined, nor do they allow configuration to suit a given driver taste or preference.

Some vehicles are equipped to connect with cell phones or other personal devices. These devices typically have their own display, and in some cases the information is ported to an in vehicle display. If an in-vehicle display is used, it may or may not resemble the visual format of the personal device. For example, some of these personal devices are connected to the entertainment system, and so rely on the entertainment display to relay increasing functionality and status information of the personal device. Such entertainment displays and other displays such as navigation displays are often located in the center stack region of the vehicle interior, and so are out of direct line of sight for the operator.

In general, the operator has limited ability to configure, format, or prioritize information in any of several vehicle operation modes. The information is typically distributed among multiple displays at distinct locations, and is not logically integrated or associated so multiple pieces of valuable information are readily conveyed to the operator.

### SUMMARY OF THE INVENTION

In accordance with one embodiment of this invention, a method of displaying information to a person viewing a configurable display in a vehicle provided. The images on the display correspond to an image signal from a controller. The method includes the step of displaying one of a plurality of page formats at a time. Each page format includes a first image in a distinct region of the display. The first image is positioned in an upper region of the display when information conveyed by the first image originates from outside the vehicle, and the first image is positioned in a lower region of the display when information conveyed by the first image originates from within the vehicle.

In another embodiment of the present invention, a system for displaying information to a person in a vehicle is provided. The system includes a configurable display configured to display images, and a controller. The controller is configured to provide an image signal to the configurable display such that images on the display correspond to an image signal from a controller. The controller is configured to display one of a plurality of page formats at a time. Each page format comprises a first image in a distinct region of the display. The first image is positioned in an upper region of the display when information conveyed by the first image originates from outside the vehicle, and the first image is positioned in a lower region of the display when information conveyed by the first image originates from within the vehicle.

Further features and advantages of the invention will appear more clearly on a reading of the following detailed description of the preferred embodiment of the invention, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a perspective view of a vehicle interior equipped with a configurable display in accordance with one embodiment;

Fig. 2 is a format for an image page format for display on the configurable display of Fig. 1 in accordance with one embodiment;

Fig. 3 is an example page format for display on the configurable display of Fig. 1 in accordance with one embodiment;

Fig. 4 is an example page format for display on the configurable display of Fig. 1 in accordance with one embodiment;

Fig. 5 is an example page format for display on the configurable display of Fig. 1 in accordance with one embodiment;

Fig. 6 is an example page format for display on the configurable display of Fig. 1 in accordance with one embodiment;

Fig. 7 is an example page format for display on the configurable display of Fig. 1 in accordance with one embodiment; and

Fig. 8 is a flowchart of a method to display page formats the configurable display of Fig. 1 in accordance with one embodiment.

### DESCRIPTION OF THE PREFERRED EMBODIMENT

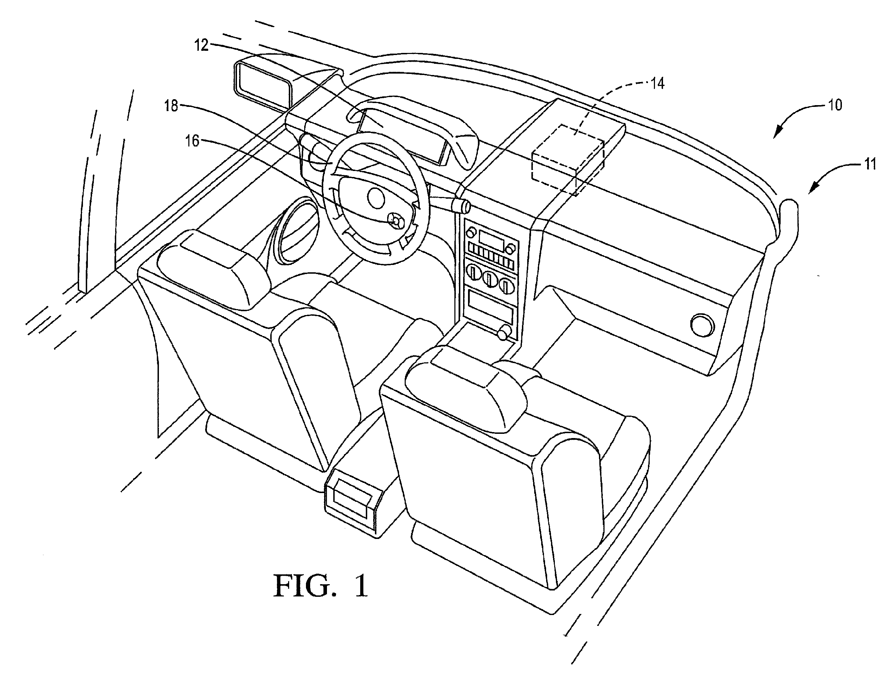

Fig. 1 illustrates a non-limiting example of a vehicle 10 equipped with a display system 11 that includes a configurable display 12 receiving an image signal from a controller 14 operating at least in part in response to command signals from an input device 16, illustrated here as, but not limited to, a five-way switch pad mounted on the steering wheel 18. The vehicle 10 illustrated here is a passenger type automobile, but it will be recognized that in view of the teaching herein, the vehicle could also be a large heavy-duty type truck, an off-road construction vehicle, a watercraft, or the like. In general, the display 12 shows or displays images to a person (not shown), for example an operator or driver of the vehicle 10. Images are displayed on a display device similar to a computer monitor or television, and so can be characterized as being a configurable display. In particular, the variety of images that can be shown or displayed on the display 12 is not limited by templates or pre-determined graphics applied to the display, or other similar mechanical contrivances, as is the case with many automotive instrument clusters. For example, the display 12 may be a liquid crystal display (LCD) capable of displaying full-color images.

The controller 14 may include a processor such as a microprocessor or other control circuitry as should be evident to those in the art. The controller 14 may include memory, including non-volatile memory, such as electrically erasable programmable read-only memory (EEPROM) for storing one or more routines, thresholds and captured data. The one or more routines may be executed by the processor to perform steps in response to control signals from the input device 16 or other signals from the vehicle 10 received by the controller 14 for determining the image signal as described herein. The image signal output by the controller 14 to the display 12 is preferably by way of one or more wires (not shown), but alternatively could be by way of optical fiber or by wireless communication, as should be evident to those in the art. Similarly, the command signals from the input device 16 to the controller 14 may also be via wires, optical fiber, wireless communication, or the like.

In general, the information displayed to a person (not shown) is organized on the display 12 in a manner that may be characterized as a directional stratum of the earth and our environment. That is, in general, information displayed on an upper portion or region of the display 12 may be thought of as being directed towards or originating from the earth's atmosphere, or above the horizon, or from outside the vehicle 10. Likewise, information displayed on a lower portion or region of the display 12 may be thought of as being directed towards or from the earth's ground level, or below the Horizon, or from inside the vehicle 10. Optionally, information may be displayed in a central or middle portion or region of the display 12, for example on or about a horizon line across the middle of the display corresponding to space between the earth's surface and atmosphere, and so may be used to display information that is outside the vehicle, but proximate to the vehicle, for example an ambient temperature of air surrounding the vehicle. This arrangement of information is designed to create a stratified 'mental model' corresponding to the layout or page format of various user interface screens and options. As such, the stratifications of information are arranged to correspond to a virtual representation of the person's world space, and given functional assignments according to the elevation depicted by the page format layout.

As will be described in more detail below by way of example and not limitation, the system 11 described herein is configured to display one of five different page formats during normal conditions, and may display alternative page formats when abnormal conditions are detected or predetermined events occur. The input device 16 may be used to scroll-up or scroll-down through the page formats in order to step through various layers or page formats. In this non-limiting example, one page format is designated as the home page relative to other higher and lower layers or page formats.

The higher level page formats may be thought of as 'above the Horizon' and are page formats directed to display, view, and access information influenced to greater degree by outside/external influences or from higher perspectives relative to the home page format. For example, a navigation page format that is 'higher' than the home page format may depict navigation information using a 3D type map having an elevated perspective, while the home page format merely indicates a distance to the next turn. Information from outside the vehicle may include, but are not limited to, GPS Navigation data, vehicle to vehicle communications, and web-data/information accessible via the internet.

In contrast to a higher level page format, the home page may be thought of as corresponding to a ground level or horizon line perspective that displays information needed for normal commuting. The home page may be thought of as showing a perspective that looks directly forward relative to the vehicle 10 and displays a balance of data relative to the immediate external world, vehicle surroundings, and direction, and is optimized for non-distracted driving. The lower layers may be thought of as 'below the horizon' and so provides information that is generally more about the vehicle and its performance, for example detailed instrumentation reading, performance driving statistics, and vehicle diagnostics.

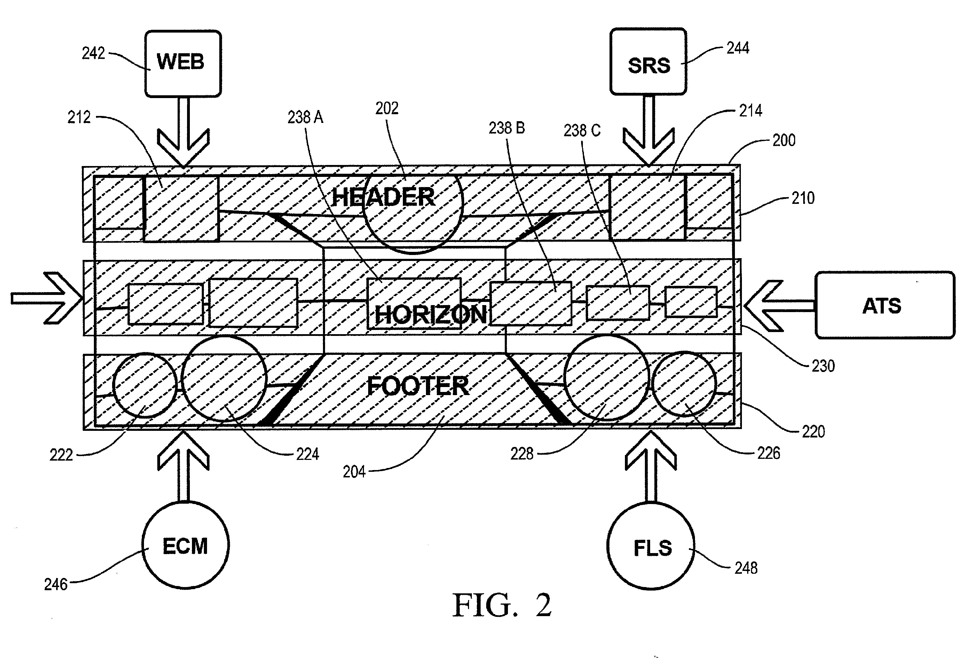

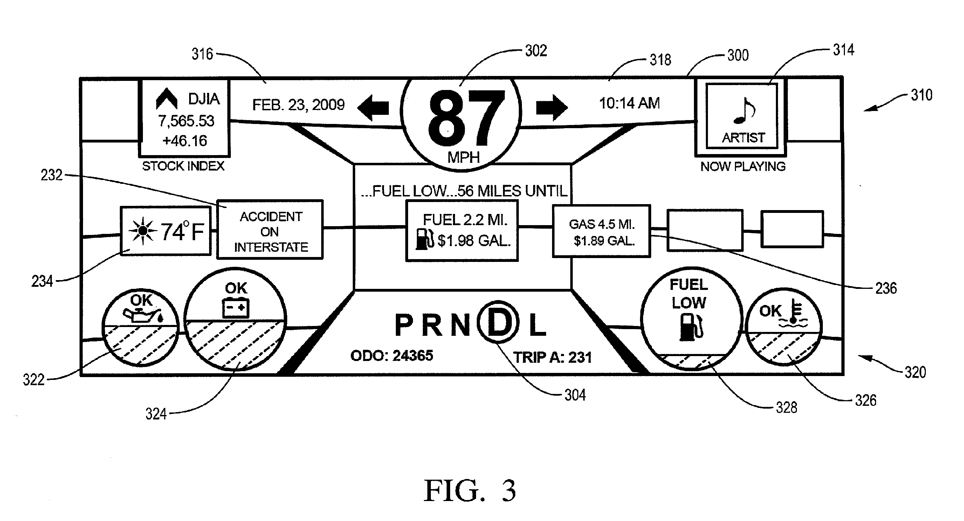

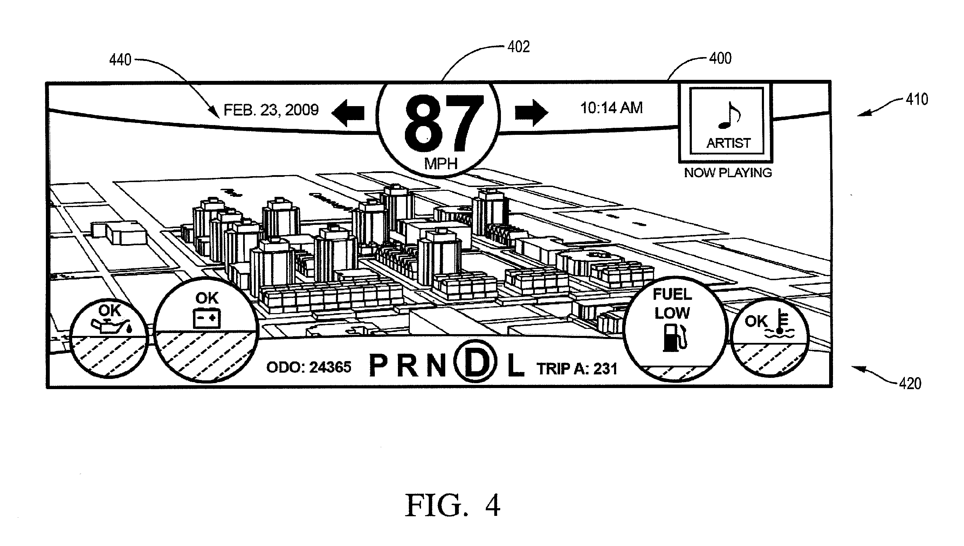

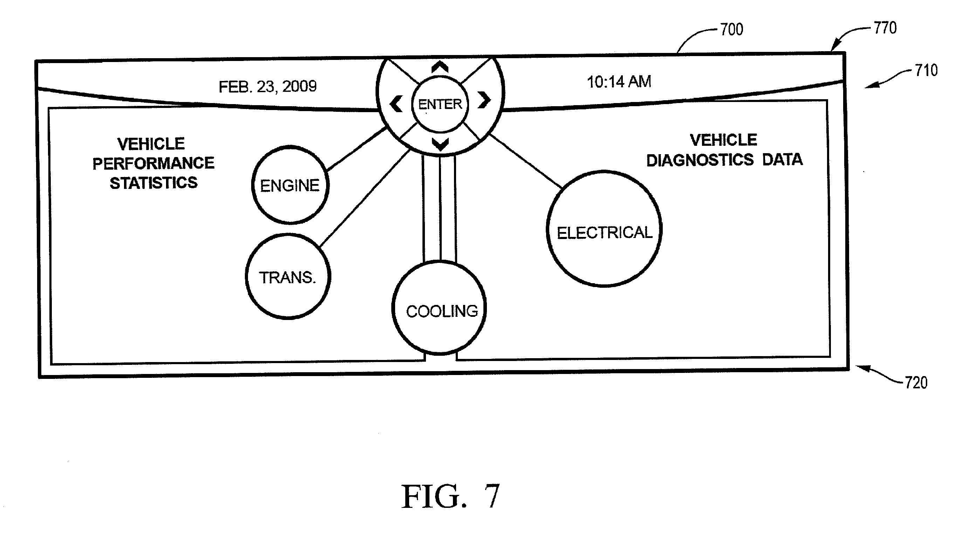

Fig. 2 illustrates a non-limiting example of a generic page format 200 useful to discuss specific page formats (Fig. 3-7) described below. Each page format typically includes several images arranged on the display 12, where a specific arrangement of images generally defines a specific page format. In this example, the page format 200 defines a header region 210, a footer region 220, and a horizon region 230. As suggested above, the header region 210 is generally intended to show images conveying information originating from outside the vehicle, and the footer region 220 is generally intended to show images conveying information originating from inside the vehicle. However, this intended division does not exclude certain inside information from being displayed in the header region 210.

It is noted that some government regulations require that certain vehicle information be displayed at all times when the vehicle is traveling, for example see United States Federal Motor Vehicle Safety Standard No. 101 FMVSS101. Page formats available when the vehicle 10 is traveling must generally indicate certain information from inside the vehicle 10, such as vehicle speed. This required information may be displayed by required images that may be excluded from the positioning criteria suggested above. For example, several of the page formats displayed when the vehicle 10 is traveling may include a speedometer image 201 in the header region 210 for indicating vehicle speed, event though information for this required image originates from inside the vehicle 10. Another example of a required image is a PRNDL image 202 in the footer region 220 for indicating selected transmission gear. In view of this exception for required images, other images characterized as selected or optional are generally positioned based on the origin of the information.

In accordance with the suggested division of inside-the-vehicle information versus outside-the-vehicle information described above, the header region 210 may display a web-access image 212 configured to convey data or information from a web-site, where in the web-site is accessed by way of a cellular phone communication system, or a satellite communication systems, or a WiFi® hot spot, illustrated here as a box 242 and labeled 'WEB', and may convey, for example, the present market value of a particular stock. In another example, the header region 210 may display a broadcast image 214 configured to convey broad cast information such as a song title or channel designation received from, for example, a satellite radio system (SRS) as indicated by box 244. Likewise, the footer region 220 may display an oil level image 222, a battery charge image 224, and an engine temperature image 226 to convey engine operating information received from an engine control module (ECM) as indicated by circle 246. The footer region may also display a fuel level image 228 to convey fuel level information received from fuel level sender (FLS) as indicated by circle 248.

The horizon region 230 may include alert sign images 238A, 238B, 238C that appear in the horizon region 230 in an order and size proportion that is relative to their proximity in the real world. These alert sign images may be useful to convey warnings or and points of interest (POI's) that are closest along the trip route become larger and describe more detailed information/graphics as the vehicle 10 approaches the warnings or and points of interest. Alert sign images conveying information that is further away would be more simplistic in nature and be placed off to the left or right and so would appear to be further away on the horizon.

Figs. 3-7 show non-limiting examples of specific page formats of the five pages formats suggested above: a home page 300, a navigation page 400, a web-access page 500, a drive page 600, and a diagnostics page 700. The hierarchical order of the pages corresponding to the mental model being created, arranged from highest to lowest in the sense described above, is: the web-access page 500, then the navigation page 400, then the home page 300, then the drive page 600, and then the diagnostics page 700. In general, each of the pages may be characterized as defining an upper region (310, 410, 510, 610, 710) and a lower region (320, 420, 520, 620, 720). While no particular line of demarcation between the upper regions and the lower regions is illustrated, the upper region of the higher level page formats, e.g. upper region 410 and 510, is generally a larger portion of the display than the upper regions of the lower level formats, e.g. upper region 610 and 710. This proportioning is deliberate and intended to promulgate the notion of creating a mental model for the person viewing the display 12 having multiple layers or page formats associated with varying sets of data and input modes, in which the information displayed are associated cognitively with the location and function of corresponding parts in the external reality that is being simulated, and so make it easier for the person selecting which page to view to remember whether to scroll-up or scroll-down to view the desired information. In particular mental model suggests the idea of a theoretical cross section through the earth's surface and its surrounding atmosphere including various stratum or layers that correspond metaphorically to layers or display regions of the system 11 in which information presented on each layer or page format is relative to events or information in reality as they appear on the corresponding layers that are being simulated in the mental model.

For the purpose of explanation and not limitation, the page formats are shown as distinctly different pages. However, it is envisioned that the scrolling between different screens will appear to be a more seamless transition without the obvious page format changes evident in the exemplary page formats. This seamless transition would provide the appearance that corresponds to a person looking through a window frame and the virtual world therein is moving up or down or "panning" rather than switching incrementally between the various page formats. It is envisioned that this would give the effect of a simulated 3D world of vehicle environment and offer a more fluid transition between the various sets of data.

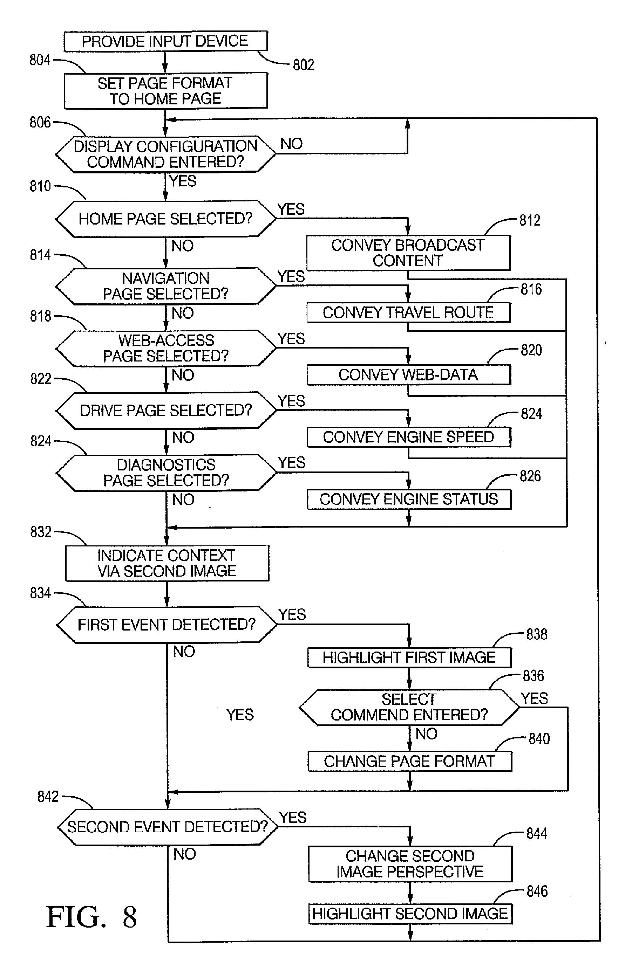

Fig. 8 illustrates a non-limiting example of a method 800 of displaying information to a person viewing the configurable display 12 in the vehicle 10. As describe above, images on the display 12 correspond to image signals from the controller 14. As will become apparent in the description below, several steps in the method cooperate to perform the overarching step of displaying one of a plurality of page formats (Fig. 3-7), generally one at a time. For example, step 828, DISPLAY FIRST IMAGE, includes displaying a first image in a distinct region of the display 12, and is part of the displaying a page format step.

In general, the first image is positioned in an upper region (310, 410, 510, 610, 710) of the display 12 when information conveyed by the first image originates from outside the vehicle 10, and the first image is positioned in a lower region (320, 420, 520, 620, 720) of the display 12 when information conveyed by the first image originates from within the vehicle 10. The first image may be any one of the several images shown in Fig. 2, as will be pointed out with regard to Fig. 3-7 in the following description. In the description of method 800 below, some steps are included only for the purpose of explanation and not limitation, and some of the steps may be optional and so excluded without disabling the method 800 from executing the step of displaying one of a plurality of page formats.

Step 802, PROVIDE INPUT DEVICE, may include equipping the steering wheel 18 with an input device 16 adapted for the person to enter a display configuration command. A list of display configuration commands may include a scroll-up command and a scroll-down command. For example, the input device may be a pair of push buttons or rocker switch so these two display configuration commands can be readily entered. Alternatively, the input device may be a five-way navigation switch pad so additional display configuration commands can be entered. A five-way navigation switch pad is a type of input device that will be recognized by those skilled in the art. Alternatively, the input device may be multiple pushbuttons located on the steering wheel 18 or within easy reach of an operator of the vehicle 10. Alternatively, the vehicle may be equipped with a motion sensor or image process configured to detect hand motion, and so scrolling or panning of the image displayed may controlled by a hand gesture or hand motion.

Step 804, SET PAGE FORMAT TO HOME PAGE, is typically executed when power is initially applied to the system 11, for example when the operator starts the vehicle engine. This step is helpful to assure that the system 11 powers up in a consistent manner.

Step 806, DISPLAY CONFIGURATION COMMAND ENTERED?, may cause the method 800 to execute the short logic loop illustrated until a configuration command is received from the input device 16. It should be appreciated that this short logic loop around step 806 does not preclude the controller 14 updating any of the various individual images associated with the page format on display, where the update is generally in accordance with changes in information received by the controller 14. For example, if the vehicle speed changes, the required speedometer image 202 will be updated even though no configuration command was entered. Likewise, information displayed in the various selected images will also be updated. The method 800 will exit this loop when a display configuration command is entered via the input device 16, and proceed to step 810.

Alternatively, the configuration command could be determined automatically based on signals from various sensors in the vehicle 10 and according to algorithms within the controller 14. For example, GPS location, optical sensing systems, and/or vehicle speed could be used to determine a configuration command to optimize the display for a particular driving scenario. For example, if an open winding road is detected, and the driver is accelerating aggressively, the display may be configured to shows a series of vehicle performance gauges on the screen. Additionally, if based on GPS the controller determines that the vehicle 10 is traveling on route not previously traveled, the controller 14 may be configured to automatically display navigation information.

Steps 810-824 illustrate a non-limiting way to determine which of the five page formats (300, 400, 500, 600, 700) is selected for display. This particular arrangement of logic is only for the purpose of simplifying explanation. Preferably, the controller 14 receives either a scroll-up command or a scroll-down command, and so single steps up or down the hierarchy of page formats one step at a time. Specific steps to perform this step-up/step-down action will be known to those in the art. In general, the method 800 changes the page format on display 12 to a page format characterized as having a greater portion of information displayed originating from outside the vehicle 10 when the controller 14 receives a scroll-up command from the input device 16, and changes the page format on display 12 to a page format characterized as having a greater portion of information displayed originating from within the vehicle when the controller 14 receives a scroll-down command from the input device 16.

Displaying one of the page formats (300, 400, 500, 600, 700) generally includes displaying a first image associated with page format. The first image displayed is generally configured to convey information in a manner consistent with the page format on display. For example, when the home page 300 is selected for display, the image selected for conveying navigation information may only provide the distance to the next turn, or distance to the closest fueling station. This limited amount of detail is consistent with the scope of information displayed by the home page 300. In contrast, when the navigation page 400 is selected for display, the image selected for conveying navigation information generally has greater detail, for example by showing a map of the area about the vehicle 10, and highlighting a suggested travel route on the map. By configuring a first image to be consistent with the page format on display, the method 800 is able to efficiently convey information to the person via the first image associated with the page format (300, 400, 500, 600, 700) selected.

Step 810, HOME PAGE SELECTED?, may be executed by the controller 14 to determine if the home page 300 has been selected for display. If NO, the method 800 proceeds to step 814. If YES, the home page 300 may be shown on the display 12 that may include required images such as a vehicle speed image 302, and may include selected images such as a first home image 314 positioned in an upper home page region 310. The first home image 314 is generally configured to convey broadcast content information such as, for example, the name of a song being broadcast, a pictorial graphic associated with a song, or an indication of what channel is being received. Other images illustrated in Fig. 3 that may be selected for display, and so are non-limiting examples of a first image, include a date image 316, a time image 318, an ambient temperature image 232, an accident notification image 234, a fuel station image 236, an engine oil level image 322, a vehicle battery charge image 324, a POND image 304, a fuel level image 328, and an engine water temperature image 326.

Step 812, CONVEY BROADCAST CONTENT, may include updating the first home image 314 so information such as the title of the song be broadcast and shown to the person by the first home image is up to date. It should be recognized that the 'first image' of any page formats (300, 400, 500, 600, 700) may be any one or more of the selectable images shown in each of the exemplary page formats.

Step 814, NAVIGATION PAGE SELECTED?, may be executed by the controller 14 to determine if the navigation page 400 has been selected for display. If NO, the method 800 proceeds to step 818. If YES, the navigation page 400 may be shown on the display 12 that may include required images such as a vehicle speed image 402, and may include selected images such as a first navigation image 440 positioned in an upper navigation page region 410.

Step 816, CONVEY TRAVEL ROUTE, may include updating the first navigation image 440 so information such where the vehicle 10 is located on the map is up to date. The first navigation image 440 may also be configured to convey other navigation information, such as a suggested travel route from the present location to a selected destination.

Step 818, WEB-ACCESS PAGE SELECTED?, may be executed by the controller 14 to determine if the web-access page 500 has been selected for display. If NO, the method 800 proceeds to step 822. If YES, the web-access page 500 will be shown on the display 12 that may include a first web-access image 550 positioned in an upper web-access page region 510. The controller 14 may be configured to only display the web-access page 500 if the vehicle is not traveling, for example the vehicle transmission is in park. If the vehicle 10 is not traveling, the web-access page 500 may not need to display a vehicle speed image as described above. An input device image 552 may be display to show an image corresponding to the input device 16, and so may be able to indicate which button in the input device is associated with a particular web address.

Step 820, CONVEY WEB-DATA, may include updating the first web-access image 550 so information such as an indication that new, unread e-mail is available at the person's e-mail web-site is indicated by an e-mail icon 554. As suggested above with regard to controlling the page format being displayed, the web-access page 500 may be selected in response to a scroll-up command while the navigation page 400 was on display.

Step 822, DRIVE PAGE SELECTED?, may be executed by the controller 14 to determine if the drive page 600 has been selected for display. If NO, the method 800 proceeds to step 824. If YES, the drive page 600 may be shown on the display 12, which may includes a first tachometer image 650 positioned in an upper drive page region 610. The drive page 600 displays images predominately directed to conveying information from within the vehicle 10, but images illustrated here are more graphical in nature, corresponding to what may be seen by a vehicle operator viewing a more conventional type of instrument cluster.

Step 824, CONVEY ENGINE SPEED, may include updating the first tachometer image 660 so the engine speed conveyed is up to date. The drive page 600 may be selected in response to a scroll-down command from the input device 16 while the home page 300 was on display. The drive page includes a first tachometer image 660 positioned in an upper drive page region 610 configured to convey vehicle operation information. In particular, the drive page 600 may convey engine speed to the person via the first tachometer image 660.

Step 826, DIAGNOSTICS PAGE SELECTED?, may be executed by the controller 14 to determine if the diagnostics page 700 has been selected for display. If NO, the method 800 proceeds to step 832. If YES, the diagnostics page 700 will be shown on the display 12, which includes a first diagnostics image 770 positioned in an upper diagnostics page region 710.

Step 824, CONVEY ENGINE STATUS, may include updating the first diagnostics image 770 so engine operating information is up to date. The diagnostics page 700 may be selected in response to a scroll-down command while the drive page 600 on display 12.

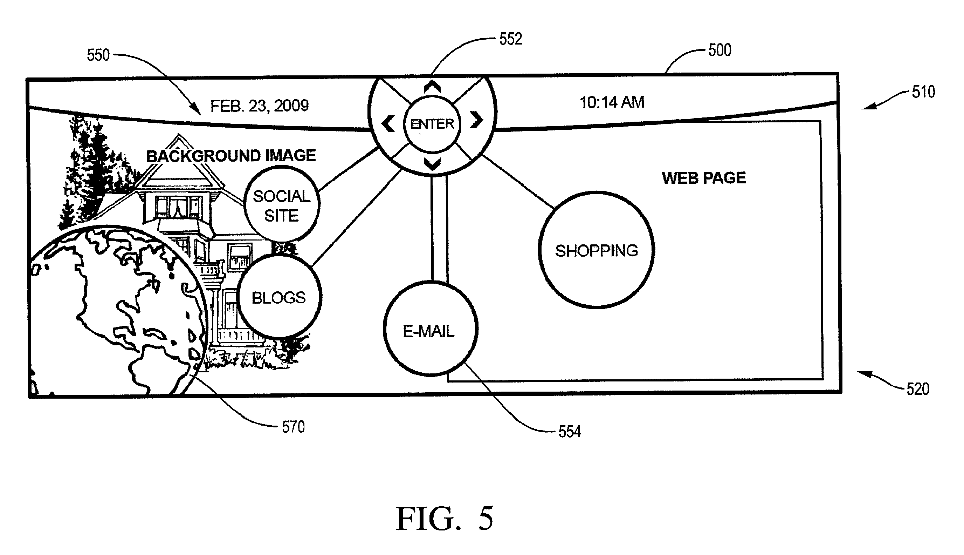

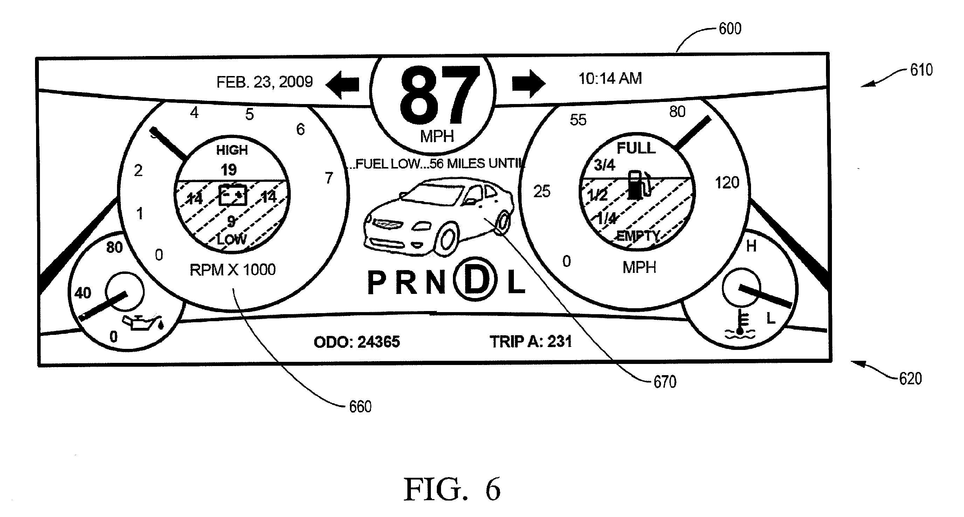

Step 832, INDICATE CONTEXT VIA SECOND IMAGE, may be executed while any of the plurality of page formats is being displayed. Step 832 may include displaying a second image occupying a second portion of the display, for example a vehicle model 670 (Fig. 6). The second image is generally characterized as being a predetermined image and having a perspective that corresponds to a location outside the vehicle 10. The second image is further configured to indicate to the person a context of the information on display 12. In this example, the vehicle model 670 conveys that the drive page 600 is conveying information predominately directed toward operating the vehicle. As another example, a globe model 570 (Fig. 5) conveys that information shown on the web-access page 500 is predominately directed to information associated with the world-wide-web. As such, these two examples illustrate how step 832 accomplishes indicating an information context via the second image.

An alternative embodiment of method 800 may include step 834, FIRST EVENT DETECTED?; step 836, HIGHLIGHT FIRST IMAGE; step 838, SELECT COMMEND ENTERED?; and step 840, CHANGE PAGE FORMAT. These steps may cooperate so when an event such as the vehicle temperature exceeding a threshold temperature, or a weather warning being issued is detected, the controller 14 highlights a corresponding image on the display. Then if the person wants more detailed information, the person may enter a select command via the input device 16, and the controller will change the page format to one of the page formats described above, or an alternative special condition page format so more detailed information can be effectively provided to the person.

An alternative embodiment of method 800 may include step 842, SECOND EVENT DETECTED?; step 844, CHANGE SECOND IMAGE PERSPECTIVE; and step 846, HIGHLIGHT SECOND IMAGE. These steps may cooperate so that when a second event such as the controller 14 receiving an indication that a headlight bulb is burned out, the vehicle model 670 (Fig. 6) may be rotated in order to change the perspective of the vehicle model 670 so that the headlights of the vehicle model is shown, and then, for example, the headlight on the vehicle model 670 corresponding to the burned out headlight may be highlighted, for example by appearing to flash. Furthermore, the controller 14 may be configured to display a replacement auto parts store location and/or current prices in the form of pop-up windows or alerts to the driver based on the controller 14 determining that a part or vehicle system has failed or is about to fail, and needs replacement.

Accordingly, an system 11, and a method 800 of displaying information in a vehicle using multiple pages configured to convey a mental model of the environment about the vehicle, and displaying multiple pages arranged in a hierarchical order to further convey a mental model of how information is arranged on the various pages is provided. The arrangement of information on each page format and the arrangement of the page formats goes beyond mere design choice as the arrangement is readily understood by a person because the mental model helps the person quickly find information on a particular page format, and determine on what page format particular information is likely to be available. As such, the mental models formed by this arrangement allow the person to search a wide variety of information while minimizing distraction of the person while operating the vehicle 10.

While this invention has been described in terms of the preferred embodiments thereof, it is not intended to be so limited, but rather only to the extent set forth in the claims that follow.

## Claims

1. A method of displaying information to a person viewing a configurable display (12) in a vehicle (10), wherein images (201, 202, 212, 214, 222, 224, 226, 228, 238a, 238b, 238c) on the display correspond to an image signal from a controller (14), said method (800) comprising:
displaying one of a plurality of page formats (200, 300, 400, 500, 600, 700) at a time, wherein each page format (200, 300, 400, 500, 600, 700) comprises a first image (314, 440, 550, 660, 770) in a distinct region of the display (12), wherein the first image is positioned in an upper region (310, 410, 510, 610, 710) of the display (12) when information conveyed by the first image originates from outside the vehicle (10), and the first image is positioned in a lower region (320, 420, 520, 620, 720) of the display (12) when information conveyed by the first image originates from within the vehicle (10).

2. The method (800) in accordance with claim 1, wherein the first image (314, 440, 550, 660, 770) is configured to convey information in a manner consistent with the page format (200) on display (12), wherein the method (800) further comprises
conveying information via the first image.

3. The method (800) in accordance with claim 1, wherein the plurality of page formats includes a home page (300) that comprises a first home image (314) positioned in an upper home page region (310), and configured to convey broadcast content information, wherein said method (800) further comprises
conveying broadcast content information to the person via the first home image (314).

4. The method (800) in accordance with claim 3, wherein said method (800) further comprises
providing an input device (16) adapted for the person to enter a display configuration command comprising a scroll-up command and a scroll-down command; and
entering a display configuration command via the input device (16).

5. The method (800) in accordance with claim 4, wherein said method (800) further comprises
changing the page format (200) on display (12) to a page format (200) characterized as having a greater portion of information displayed originating from outside the vehicle (10) when the controller (14) receives a scroll-up command from the input device (16); and
changing the page format (200) on display (12) to a page format (200) characterized as having a greater portion of information displayed originating from within the vehicle (10) when the controller (14) receives a scroll-down command from the input device (16).

6. The method (800) in accordance with claim 4, wherein said plurality of format pages includes a navigation page (400) selected in response to a scroll-up command while the home page (300) on display (12), wherein said navigation page (400) comprises a first navigation image (440) positioned in an upper navigation page region (410) configured to convey navigation information, wherein said method (800) further comprises
conveying a travel route to the person via the first navigation image (440).

7. The method (800) in accordance with claim 6, wherein said plurality of format pages includes a web-access page (500) selected in response to a scroll-up command while the navigation page (400) on display (12), wherein said web-access page (500) comprises a first web-access image (550) positioned in an upper web-access page region (510) configured to convey web-data, wherein said method (800) further comprises
conveying web-data to the person via the first web-access image (550).

8. The method (800) in accordance with claim 4, wherein said plurality of format pages includes a drive page (600) selected in response to a scroll-down command while the home page (300) on display (12), wherein said drive page (600) comprises a first tachometer image (650, 660) positioned in an upper drive page region (610) configured to convey vehicle operation information, wherein said method (800) further comprises
conveying engine speed to the person via the first drive image.

9. The method (800) in accordance with claim 8, wherein said plurality of format pages includes a diagnostics page (700) selected in response to a scroll-down command while the drive page (600) on display (12), wherein said diagnostics page (700) comprises a first diagnostics image (770) positioned in an upper diagnostics page region (710) configured to convey vehicle diagnostics information, wherein said method (800) further comprises
conveying engine status information to the person via the first drive image.

10. The method (800) in accordance with claim 4, wherein said input device (16) is further adapted for the person to enter a select command, wherein said method (800) further comprises
highlighting a first image when the controller detects a predetermined event;
entering a select commend via the input device (16) while the first image is highlighted; and
changing the page format (200) on display (12) to a page format (200) characterized as displaying more detailed information relative to the predetermined event when the controller (14) receives the select command from the input device (16).

11. The method (800) in accordance with claim 1, wherein one or more of the plurality of page formats includes a second image occupying a second portion of the display (12), said second image characterized as being a predetermined image and having a perspective that corresponds to a location outside the vehicle (10), said second image configured to indicate to the person a context of the information on display (12), wherein the method (800) further comprises indicating an information context via the second image.

12. The method (800) in accordance with claim 11, wherein said method (800) further comprises
changing the perspective of the second image and highlighting a portion of the second image in a manner effective to convey the occurrence of a predetermined event to the person when the predetermined event is detected by the controller (14).

13. A system (11) for displaying information to a person in a vehicle (10), said system (11) comprising:
a configurable display (12) configured to display (12) images (238a); and
a controller (14) configured to provide an image signal to the configurable display (12) such that images (238a) on the display correspond to an image signal from a controller (14), wherein said controller (14) is configured to display (12) one of a plurality of page formats at a time, wherein each page format (200) comprises a first image in a distinct region of the display (12), wherein the first image is positioned in an upper region (410, 610) of the display (12) when information conveyed by the first image originates from outside the vehicle (10), and the first image is positioned in a lower region of the display (12) when information conveyed by the first image originates from within the vehicle (10).
